# EUROPÄISCHE PATENTSCHRIFT

(11) **EP 2 674 988 B1**
(45) Veröffentlichungstag und Bekanntmachung des Hinweises auf die Patenterteilung: **12.08.2020**
(21) Anmeldenummer: 13171852.0
(22) Anmeldetag: 13.06.2013
(51) Int. Cl.: H02S 40/34

(54) **Photovoltaik-Paneldose mit Klemmkontaktierung der Bändchen des Solarelementes**
Photovoltaic panel socket with clamp contact for the solar element strips
Prise de panneau photovoltaïque avec contact par serrage des petites bandes de l'élément solaire

(30) Priorität: 13.06.2012 DE 102012209922
(43) Veröffentlichungstag der Anmeldung: 18.12.2013
(73) Patentinhaber: Hirschmann Automotive GmbH, 6830 Rankweil-Brederis (AT)
(72) Erfinder: Dünser, Simon, 6700 Bludenz (AT); Weiss, Marco, 6832 Roethis (AT); Schmid, Alexander, 6830 Rankweil (AT)
(74) Vertreter: Greif, Thomas

(56) Entgegenhaltungen:
- EP-A1- 2 093 806
- DE-A1-102007 006 433
- DE-A1-102009 033 481

## Beschreibung

Die Erfindung betrifft eine Photovoltaik-Paneldose, aufweisend ein Gehäuseunterteil sowie ein damit zusammenwirkendes Gehäuseoberteil, wobei zwischen dem Gehäuseunterteil und dem Gehäuseoberteil eine Dichtung vorgesehen ist sowie zumindest ein Anschlussstecker für eine Anschlussleitung und im Inneren der Photovoltaik-Paneldose ein Kontaktträger mit Kontakten vorhanden sind, gemäß den Merkmalen des Oberbegriffes des Patentanspruches 1.

Zur Ausnutzung de Sonnenenergie zwecks Umwandlung in elektrische Energie sind Solarelemente an sich bekannt. Solche Solarelemente werden in einer Vielzahl zusammengeschaltet, um ein Solarkraftwerk zu bilden, mit dem die Sonnenenergie in verwertbare elektrische Energie umgesetzt wird. Zu diesem Zweck weisen die einzelnen Solarelemente Kontakte, insbesondere Fähnchen oder Bändchen, auf, die aus der Oberfläche des Solarelementes herausragen. Da im Regelfall Gleichstrom erzeugt wird, ragen immer zwei Bändchen oder Fähnchen aus der Oberfläche des Solarelementes heraus. Dabei ist es erforderlich, mehrere Solarelemente miteinander zu verschalten, wozu Photovoltaik-Paneldosen bekannt sind, mit denen die aus der Oberfläche der Solarelemente herausragende Kontakte zu kontaktieren und über entsprechende Anschlussleitungen und über zusammenfassende Sammelleitungen die einzelnen Solarelemente parallel oder in Serie elektrisch zusammenzuschalten.

Eine solche Photovoltaik-Paneldose ist aus der EP 1503 426 A2 bekannt. Diese Photovoltaik-Paneldose weist ein Gehäuseteil und ein Gehäuseoberteil auf, die zu einem Gesamtgehäuse, welches auf der Oberfläche des Solarelementes montiert, insbesondere aufgeklebt, wird, zusammengefügt werden. Um diese Photovoltaik-Paneldose vor äußeren Einflüssen zu schützen ist eine Dichtung vorgesehen. Damit die abgegriffenen Kontakte der Solarelemente elektrisch nach außen geführt werden können, sind Anschlussstecker und Anschlussleitungen vorhanden. Außerdem befindet sich im Inneren des Gesamtgehäuses der Photovoltaik-Paneldose ein Kontaktträger mit Kontakten, wobei damit die Kontakte des Solarelementes abgegriffen und diese mit den Anschlussleitungen kontaktiert werden.

Die EP 1 503 426 A2 zeigt zwar den grundsätzlichen Aufbau einer bekannten Photovoltaik-Paneldose. In der Praxis hat es sich jedoch herausgestellt, dass diese bekannte Paneldose hinsichtlich der Anschlussmöglichkeiten nach außen, hinsichtlich des Wärmehaushaltes, hinsichtlich der internen Kontaktierung und hinsichtlich ihrer konstruktiven Gestaltung insgesamt verbesserungswürdig ist.

Bei der EP 1 503 426 A2 sind die Verbindungsleiter des Solarelementes in einem Leiterkanal angeordnet und weisen ein Versteifungselement sowie Rastmittel auf. Damit wird es ermöglicht, dass mit der Kontakteinrichtung, die auf einer Kontaktplatte angeordnet ist, die Kontaktierung des Solarelementes über die Photovoltaik-Paneldose zu deren Anschlussleitungen nach außen hin erfolgen kann. Dies bedingt jedoch zum einen eine aufwändige Konstruktion und Einbettung der Anschlüsse des Solarelementes, sodass dieses nicht kostengünstig und rationell herstellbar ist. Außerdem führt diese aufwändige Konstruktion der Kontakte des Solarelementes zu einer entsprechend aufwändigen korrespondierenden Kontaktierung seitens der Paneldose. Daher ist man inzwischen dazu übergegangen, dass zwecks rationeller Fertigung und vereinfachter Kontaktierung aus dem Solarelement lediglich Bändchen, Fähnchen oder vergleichbares herausgeführt werden, die mit geeigneten Mitteln der Photovoltaik-Paneldose zu kontaktieren sind.

Aus der DE 10 2009 033 481 A1 ist eine Anschluss- und Verbindungsvorrichtung für den elektrischen Anschluss eines Solarmoduls bekannt, mit einem ein Gehäuseunterteil und ein Gehäuseoberteil aufweisenden Gehäuse, mit mindestens einer Kontaktfeder zur elektrischen Kontaktierung mindestens einer vom elektrischen Gerät kommenden Anschlussleitung, mit mindestens einem in dem Gehäuse angeordneten Anschlusselement zum Anschluss mindestens eines Kabels, und mit mindestens einem Metallteil, über das eine durch die Kontaktfeder kontaktierte Anschlussleitung mit einem durch das Anschlusselement angeschlossenen Kabel (8) elektrisch leitend verbindbar ist, wobei das Gehäuse mindestens eine Öffnung zum Einführen des Kabels aufweist, wobei die Kontaktfeder, das Anschlusselement und das Metallteil dem Gehäuseunterteil zugeordnet sind und am Gehäuseoberteil mindestens ein Betätigungselement angeordnet ist, und wobei die Kontaktfeder beim Aufsetzen bzw. Aufdrücken des Gehäuseoberteils auf das Gehäuseunterteil aus einer ersten Position, in der die Kontaktfeder die Anschlussleitung nicht kontaktiert, in eine zweite Position verbringbar ist, in der die Anschlussleitung von der Kontaktfeder kontaktiert ist, wobei weiterhin die Kontaktfeder zwei Kontaktschenkel und einen die Kontaktschenkel verbindenden Rücken aufweist, wobei eine Überfeder vorgesehen ist, die zwei Federschenkel und einen die Federschenkel verbindenden Rücken aufweist, wobei beim Aufsetzen bzw. Aufdrücken des Gehäuseoberteils auf das Gehäuseunterteil das Betätigungselement auf den Rücken der Überfeder drückt, so dass die Überfeder aus einer ersten Position in eine zweite Position verbracht wird, und wobei die Überfeder derart ausgebildet und relativ zur Kontaktfeder verschiebbar angeordnet ist, dass die beiden Kontaktschenkel der Kontaktfeder in der zweiten Position von den beiden Federschenkeln der Überfeder so zusammengedrückt werden, dass die Anschlussleitung zwischen den beiden Kontaktschenkel klemmend kontaktiert ist.

Der Erfindung liegt daher die Aufgabe zugrunde, Verbesserungen bei der internen Kontaktierung, insbesondere bei der Kontaktierung der Kontaktfahnen oder dergleichen des Solarelementes bzw. der in der Paneldose angeordneten Dioden anzugeben.

Diese Aufgabe ist durch die Merkmale des Patentanspruches 1 gelöst.

Erfindungsgemäß ist vorgesehen, dass an dem Kontaktträger mit dem zumindest einen Kontakt ein Spannelement anbringbar ist, wobei das Spannelement von einer Vorposition in eine Verrastposition bringbar ist. Dadurch wird in vorteilhafter Weise sichergestellt, dass zunächst das Spannelement an dem Kontaktträger angeordnet werden kann, damit es verliersicher dort angeordnet und von dieser Vorposition in eine Verrastposition bringbar ist. In der Vorposition erfolgt noch keine Kontaktierung zwischen dem Kontaktelement der Solarzelle (Bändchen) und dem Kontakt des Kontaktträgers innerhalb der Photovoltaik-Paneldose. Allerdings wird es durch diese Vormontage des Spannelementes ermöglicht, dass die Photovoltaik-Paneldose auf dem Solarpanel angeordnet werden kann und dabei der Kontakt (Bändchen) des Solarpanels in unmittelbarer Nähe des Kontaktträgers mit seinem Kontakt angeordnet werden kann. Nachdem dies erfolgt ist, wird das Spannelement von seiner Vorposition an dem Kontaktträger in seine Verrastposition (Endposition) an dem Kontaktträger gebracht. Dadurch wird bewirkt, dass zum einen der Kontakt des Solarpanels an dem Kontakt des Kontaktträgers zur Anlage kommt und dadurch eine elektrische Kontaktierung realisiert wird. Außerdem wird von dem Spannelement eine Kraft sowohl auf den Kontakt des Kontaktträgers als auch auf den Kontakt des Solarpanels ausgeübt, sodass dadurch die elektrische Kontaktsicherheit erhöht wird. Dies ist insbesondere dann von Bedeutung, wenn die Photovoltaik-Paneldose rauen Umgebungsbedingungen, insbesondere Feuchtigkeit, wechselnden Temperaturen und dergleichen, ausgesetzt wird. Durch das erfindungsgemäße Spannelement wird die interne Kontaktierung der Photovoltaik-Paneldose verbessert. Dies erfolgt dadurch, dass die Montage mittels des erfindungsgemäßen Spannelementes vereinfacht und nach erfolgter Montage des Spannelementes die elektrische Kontaktierung verbessert wird. Mittels des erfindungsgemäßen Spannelementes erfolgt die Kontaktierung der Kontaktfahnen (Bändchen, Kontakte oder dergleichen) des Solarelementes (insbesondere des Solarpanels) und/oder die Kontaktierung der Kontakte innerhalb der Photovoltaik-Paneldose, mit den in dieser Paneldose angeordneten Dioden.

Das erfindungsgemäße Spannelement besteht aus einem elektrisch leitenden Material. Es kann aus Vollmaterial (wie zum Beispiel einem Blech) hergestellt sein und gegebenenfalls zur Erhöhung der Kontaktsicherheit beschichtet sein. In besonders vorteilhafter Weise ist die Beschichtung die gleiche wie das Material bzw. die Beschichtung des Bändchens, der Kontaktfahne, des Kontaktes des Kontaktträgers und aller weiteren beteiligten Kontaktelemente. In ebenfalls besonders vorteilhafter Weise wird das Spannelement in einem Stanzbiege-, Stanzroll- oder einem vergleichbaren Verfahren hergestellt. Dies erlaubt eine rationelle Herstellung solcher Spannelemente in großen Stückzahlen.

Weitere vorteilhafte Ausgestaltungen der Erfindung sind in den Unteransprüchen angegeben, wobei diese weiteren Ausgestaltungen im Folgenden unter Bezugnahme auf die Figuren näher erläutert werden.

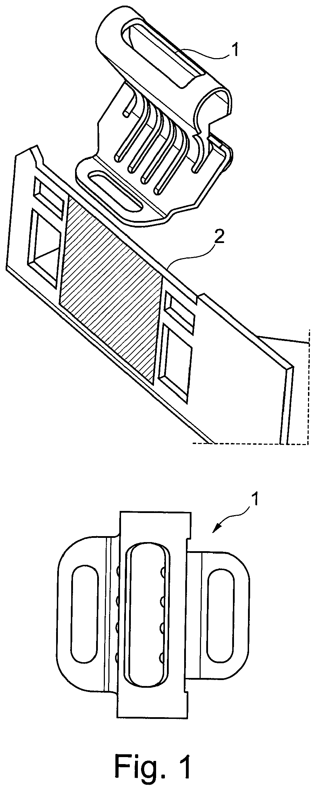

In Figur 1 ist, soweit im Einzelnen dargestellt, mit 1 das Spannelement und mit 2 ein Kontaktträger bezeichnet. Die spezielle Ausgestaltung des Spannelementes 1, die für die Erfindung wesentlich ist, wird im Folgenden in den weiteren Figuren noch näher erläutert. Der Kontaktträger 2 ist Bestandteil der Photovoltaik-Paneldose und wird in vorteilhafter Weise von dem Gehäuseunterteil (oder alternativ auch von dem Gehäuseoberteil) gebildet. Das bedeutet, dass das Gehäuseunterteil (bzw. das Gehäuseoberteil) der Photovoltaik-Paneldose (die hier nicht näher dargestellt ist) und der Kontaktträger 2 einstückig ausgebildet sind oder voneinander separate Bauteile bilden, wobei in diesem Fall der Kontaktträger 2 über geeignete Maßnahmen (wie zum Beispiel Verkleben, Verstemmen oder dergleichen) mit dem Gehäuseunterteil (bzw. dem Gehäuseoberteil) dauerhaft verbunden wird.

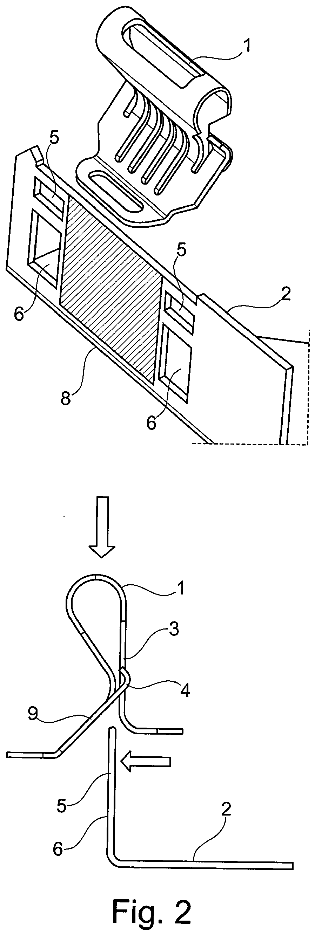

In Figur 2 ist dargestellt, dass an dem Kontaktträger 2 das Spannelement 1 anbringbar ist, wobei hier noch nicht dargestellt ist, dass das Spannelement 1 von einer Vorposition in eine Verrastposition (auch als Endposition zu bezeichnen) bringbar ist. Gemäß Figur 2 kann, muss aber nicht, das Spannelement 1 eine Öffnung 3 aufweisen. Auf jeden Fall weist es zumindest einen Rasthaken 4 auf, auf den noch näher eingegangen wird.

Der Kontaktträger 2 weist seinerseits zumindest eine Öffnung 5 und eine Öffnung 6 auf. Diese Öffnungen 5, 6 sind in axialer Richtung (siehe den Pfeil links oben in Figur 2) übereinander angeordnet. Bei dem gezeigten Ausführungsbeispiel sind rechts und links eines an dem Kontaktträger 2 vorhandenen Kontaktes 8 jeweils Öffnungen 5, 6 vorhanden. Diese Öffnungen 5, 6 sind einmal in der dreidimensionalen rechten Darstellung der Figur 2 und einmal in der Schnittdarstellung (linke Darstellung) zu erkennen. In der Figur 2 sind das Spannelement 1 und der Kontaktträger 2 noch nicht zusammengebracht worden, sodass sich diese beiden Elemente noch nicht in der Vorposition zueinander befinden. Die Vorposition wird erst dann erreicht, wenn gemäß Pfeil in Figur 2 das Spannelement 1 bei Betrachtung der Figur 2 nach unten in Richtung des nach oben abstehenden Teiles des Kontaktträgers 2 bewegt wird.

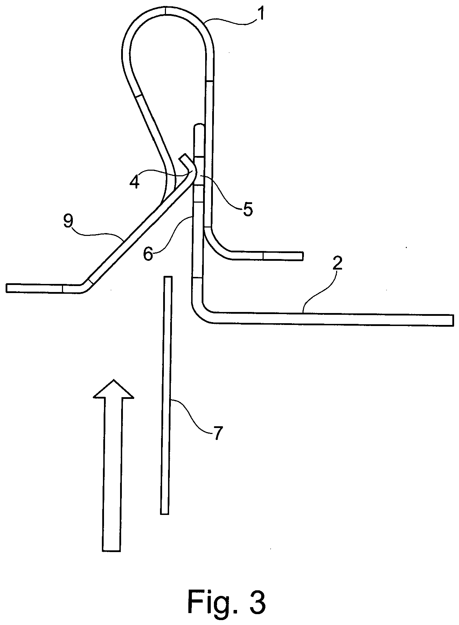

Figur 3 zeigt die Stellung, dass das Spannelement in der Vorposition sich relativ zu dem Kontaktträger 2 befindet. Diese Position wird dann erreicht, wenn das Spannelement 1 in Richtung des Kontaktträgers 2 bewegt wird und dabei der Rasthaken 4 über die obere Endkante des Kontaktträgers 2 gleitet, bis der Rasthaken 4 in die obere Öffnung 5 einrasten kann. Hierzu sind die Größe (Querschnitt) der Öffnung 5 und die Geometrie des Rasthakens 4 aufeinander abgestimmt. Gemäß Figur 3 ist also das Spannelement 1 in einer Vorposition an dem Kontaktträger 2 angeordnet. Dies stellt auch den Auslieferungszustand der Photovoltaik-Paneldose dar, die in diesem Zustand dazu geeignet und ausgebildet ist, auf das Solarpanel aufgesetzt und dort dauerhaft befestigt zu werden. Zu diesem Zweck ist es erforderlich, dass ein Kontakt 7 (Kontaktfahne, Bändchen oder dergleichen) in etwa in einem rechten Winkel von der Oberfläche des Solarelementes absteht. Dies ist in Figur 3 dargestellt, wobei das Solarelement, aus dem der Kontakt 7 herausragt, nicht dargestellt ist. Wenn nun die derart vorbereitete Photovoltaik-Paneldose auf die Oberfläche des Solarelementes aufgesetzt wird, bewegt sich der Kontakt 7 gemäß Pfeilrichtung in Figur 3 in Richtung des Spannelementes 1.

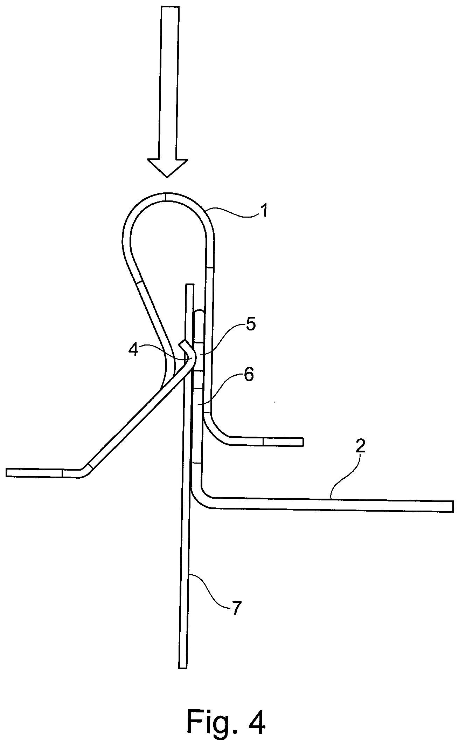

In Figur 4 ist der Zustand dargestellt, der erreicht wird, wenn die gemäß Figur 3 vorbereitete Photovoltaik-Paneldose auf das Solarpanel aufgesetzt worden ist. In diesem Fall ist der Kontakt 7 in den Innenbereich des Spannelementes 1 hineinbewegt worden, sodass dadurch ermöglicht wird, dass der Kontakt 7 an dem Kontakt 8 des Kontaktträgers 2 zur Anlage kommen kann. Das heißt, dass in der Vorposition (Vorverraststellung) des Spannelementes 1 dieses Spannelement 1 soweit aufgespannt ist, dass der Kontakt 7 in den Innenbereich des Spannelementes eingeführt werden kann. In diesem Innenbereich befindet sich auch ein Teil des Kontaktträgers 2 mit seinem Kontakt 8, sodass es dadurch ermöglicht wird, ohne großen Kraftaufwand den Kontakt 7 in den Innenbereich des Spannelementes einzuführen und gleichzeitig in den Bereich des Kontaktes 8 des Kontaktträgers 2 zu bewegen. Die Schräge 9, auch als Einführungsschräge zu bezeichnen, dient dem Toleranzausgleich, um das Einführen des Kontaktes 7 in den Innenbereich des Spannelementes 1 zu erleichtern und beim Einführen diesen gezielt zu führen.

Nachdem der Kontakt 7 in den Innenbereich des Spannelementes 1 eingeführt worden ist, das heißt dann, wenn die Photovoltaik-Paneldose auf dem Solarpanel angeordnet und dauerhaft befestigt wurde, kann das Spannelement 1 von seiner Vorposition, die in den bisherigen Figuren gezeigt war, in seine Verrastposition gebracht werden. Figur 4 zeigt noch den Zustand, dass der Kontakt 7 in seiner Endposition in dem Innenbereich des Spannelementes 1 angelangt ist und sich das Spannelement 1 noch in seiner Vorposition (Vorverraststellung) befindet. In dieser Position ist es jetzt möglich, durch Druck auf das Spannelement 1 von oben (bei Betrachtung der Figur 4) in Pfeilrichtung das Spannelement 1 von seiner dargestellten Vorposition in seine endgültige Verrastposition zu bringen. Dies erfolgt dadurch, dass der Rasthaken 4 leicht abhebt und aus der Öffnung 5 herausgeführt wird, über die Oberfläche des Kontaktträgers 2 gleitet, bis es in der Öffnung 6 wiederum einrastet. Bei dieser Bewegungsabfolge insgesamt ist es wichtig, dass sich der Rasthaken 4 immer auf der Oberfläche des Kontaktträgers 2 und niemals auf der Oberfläche des Kontaktes 8 des Kontaktträgers 2 bzw. des Kontaktes 7 abstützt. Das bedeutet, dass der zumindest eine Rasthaken 4 sich immer neben den vorgenannten Kontaktflächen befindet.

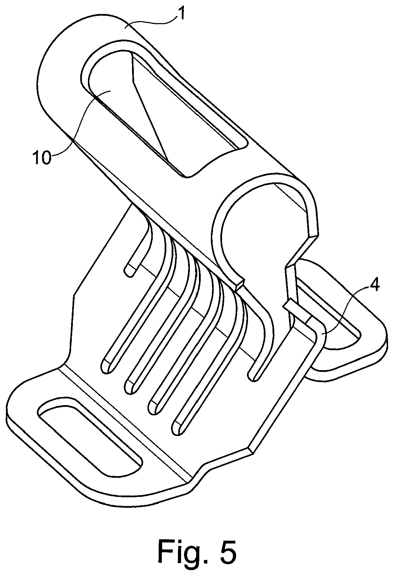

In Figur 5 ist das Spannelement 1 noch einmal im Detail dargestellt, wobei es an seinem oberen Ende eine Öffnung 10 aufweisen kann, aber nicht aufweisen muss. Ist diese Öffnung 10 vorhanden, wird es ermöglicht, dass bei der Montage des Spannelementes 1 an dem Kontaktträger 2 ein zu langer Kontakt (zu große axiale Erstreckung des Kontaktes 7 nach oben) durch diese Öffnung 10 aus dem Spannelement 1 nach oben heraustreten kann. Dadurch wird in vorteilhafter Weise die flächige Anlage des Kontaktes 7 an dem Kontakt 8 des Kontaktträgers 2 gewährleistet und nicht durch Verbiegungen des Kontaktes 7 innerhalb des Innenbereiches des Spannelementes verhindert, wenn diese Öffnung 10 nicht vorhanden wäre.

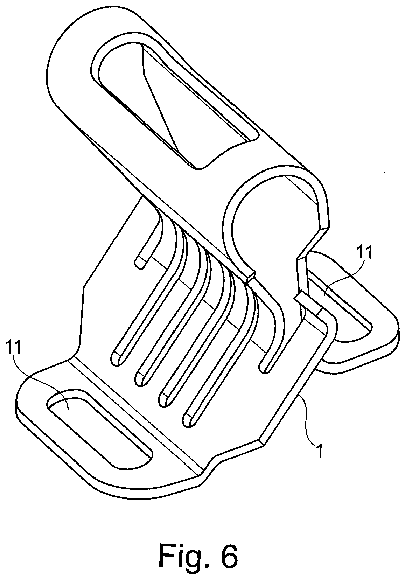

Figur 6 zeigt eine weitere Ausgestaltung des Spannelementes 1, wobei hier das Spannelement 1 zumindest eine Montageöffnung 11 in seinem einen Endbereich aufweist. Durch diese vorzugsweise zwei Montageöffnungen 11 ist es ermöglicht, dass das Spannelement 1 mittels eines geeigneten Werkzeuges, zum Beispiel einer Zange, insbesondere für die Demontagehilfe aufgespannt werden kann. Diese Montageöffnungen 11 sind für die Montage des Spannelementes 11 an dem Kontaktträger 2 und bei dem Verbringen von seiner Vorposition in die Verrastposition nicht unbedingt erforderlich. Da das Spannelement 1 in seiner Verrastposition jedoch eine hohe Kraft sowohl auf den Kontakt 7 als auch auf den Kontakt 8 des Kontaktträgers 2 aufbringt, kann es nicht ohne weiteres ohne Zuhilfenahme eines Werkzeuges wieder aufgespannt und demontiert werden. Daher sind in vorteilhafter Weise diese beiden Montageöffnungen 11 vorhanden, an die ein Werkzeug angesetzt werden kann, um das Spannelement 1 aufzuspannen und zumindest von der Verrastposition in die Vorposition (zwecks erneuter Montage) zu verbringen oder gänzlich zu entfernen.

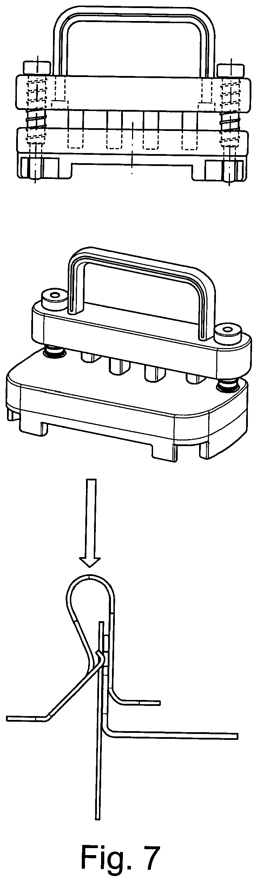

In Figur 7 ist eine Montagevorrichtung gezeigt, mit der es ermöglicht wird, nicht nur einen einzigen Kontakt 7, sondern auch mehrere nebeneinander liegende Kontakte 7 gleichzeitig mittels zugehöriger Spannelemente 1 zu montieren. Dadurch wird in vorteilhafter Weise sowohl durch die Ausgestaltung jedes einzelnen Spannelementes 1 als auch durch die Ausgestaltung des Werkzeuges die Montage weiter vereinfacht und vor allen Dingen rationalisiert.

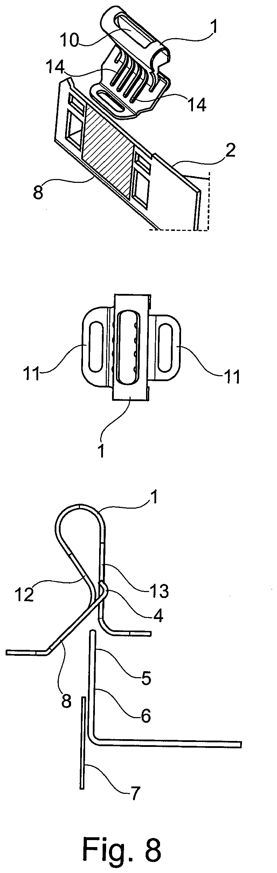

In Figur 8 sind noch einmal die beteiligten Bauelemente zwecks Kontaktierung des Kontaktes 7 des nicht dargestellten Solarpanels mit dem Kontakt 8 des Kontaktträgers 2 innerhalb der ebenfalls nicht dargestellten Photovoltaik-Paneldose gezeigt. In diesem Zusammenhang wird bezüglich der linken Darstellung der Figur 8 (oben) noch darauf hingewiesen, dass das Spannelement 1 von zwei Schenkeln 12, 13 gebildet ist, sodass der Querschnitt des Spannelementes 1 in etwa U- oder Omegaförmig zu bezeichnen ist. An dem einen der beiden Schenkel, insbesondere an dem Schenkel 12, sind der zumindest eine Rasthaken 4 sowie die Schräge 9 vorhanden. Unter Bezugnahme auf die rechte obere Darstellung der Figur 8 wird noch einmal darauf hingewiesen, dass der Kontaktträger 2 den Kontakt 8 aufweist, mit dem der Kontakt 7 mittels des Spannelementes 1 kontaktiert werden soll. Durch die entsprechende Form des Spannelementes 1 wird gewährleistet, dass mit dem Teil des Spannelementes 1, der sich in vorteilhafter Weise zwischen den beiden Rasthaken 4 befindet, Druck auf den Kontakt 7 und den Kontakt 8 des Kontaktträgers 2 ausgeübt wird. Unabhängig davon wird dadurch, dass der zumindest eine Rasthaken 4, insbesondere beide Rasthaken 4, des einen Schenkels 12 seitlich an den Kontakten 7, 8 vorbeigeführt werden, gewährleistet, dass durch diese axiale Verschiebung des Spannelementes 1 von seiner Vorposition in seine Endverrastposition die Kontaktflächen der Kontakte 7, 8 nicht durch die Rasthaken 4 des Spannelementes 1 berührt werden. Das heißt, dass die Rastelemente (Rasthaken 4 und Öffnungen 5, 6) unabhängig sind von der eigentlichen elektrischen Kontaktierung.

Schließlich sind zur Erhöhung der Kontaktkraft noch zumindest ein Schlitz 14, vorzugsweise mehrere Schlitze 14, in zumindest einem der Schenkel des Spannelementes 1, insbesondere in dem Schenkel 12, angeordnet.

Der Vollständigkeit halber sei erwähnt, dass über den Kontakt 7 des Solarpanels und den Kontakt 8 der Photovoltaik-Paneldose die von dem Solarpanel erzeugte elektrische Energie über die Photovoltaik-Paneldose und deren Anschlussleitungen nach außen hin abgeleitet werden kann. Ebenso ist es möglich, mittels des Spannelementes 1 und dem zugehörigen Kontaktträger 2 mit seinem Kontakt 8 nicht einen Kontakt 7 des Solarpanels, sondern einen Kontakt einer Diode, die sich in bekannter Weise innerhalb der Photovoltaik-Paneldose befindet, zu kontaktieren.

Genauso wie das Spannelement 1 die Öffnung 10 aufweisen kann, aber nicht muss, können auch die Montageöffnungen 11 vorhanden sein, müssen es aber nicht.

Zur allgemeinen Erläuterung: Ein Solarmodul oder Photovoltaikmodul wandelt das Licht der Sonne direkt in elektrische Energie um. Das Modul besteht aus einer Vielzahl von Solarzellen, die in Serie oder parallel geschaltet sind. Solarmodule sind als flexible und starre Ausführung verfügbar. Starre Solarmodule bestehen üblicherweise aus siliziumbasierten Solarzellen. Die Solarzellen werden hier mechanisch durch das Modul vor Umwelteinflüssen geschützt, z. B. Hagel. Flexible Solarmodule basieren auf organischen Werkstoffen und werden vorzugsweise im mobilen Bereich eingesetzt. Solarmodule selbst werden in Photovoltaikanlagen einzeln oder als Gruppen verschaltet. Sie versorgen entweder stromnetzunabhängige Verbraucher wie z. B. Satelliten oder werden zur Energieeinspeisung in das öffentliche Stromnetz genutzt. Die Gesamtheit aller Module für eine Photovoltaikanlage nennt man Solargenerator oder auch Solarkraftwerk.
(Solarelement = Solarpanel = Solarmodul = Photovoltaikmodul)

### Bezugszeichenliste

- 1.: Spannelement
- 2.: Kontaktträger
- 3.: Öffnung
- 4.: Rasthaken
- 5.: Öffnung
- 6.: Öffnung
- 7.: Kontakt
- 8.: Kontakt
- 9.: Schräge
- 10.: Öffnung
- 11.: Montageöffnung
- 12.: Schenkel
- 13.: Schenkel
- 14.: Schlitz

## Patentansprüche

1. Photovoltaik-Paneldose, aufweisend ein Gehäuseunterteil sowie ein damit zusammenwirkendes Gehäuseoberteil, wobei zwischen dem Gehäuseunterteil und dem Gehäuseoberteil eine Dichtung vorgesehen ist sowie zumindest ein Anschlussstecker für eine Anschlussleitung und im Inneren der Photovoltaik-Paneldose ein Kontaktträger (2) mit zumindest einem Kontakt (8) vorhanden sind, **dadurch gekennzeichnet, dass** an dem Kontaktträger (2) mit dem zumindest einen Kontakt (8) ein Spannelement (1) anbringbar ist, wobei das Spannelement (1) von einer Vorposition in eine Verrastposition bringbar ist und das Spannelement (1) zumindest einen Rasthaken (4) aufweist und der Kontaktträger (2) im Inneren der Photovoltaik-Paneldose zumindest zwei Öffnungen (5, 6) aufweist, wobei die eine Öffnung (5) mit dem Rasthaken (4) in der Vorposition und der Rasthaken (4) mit der zumindest weiteren Öffnung (6) in der Verrastposition zusammenwirkt.

2. Photovoltaik-Paneldose nach Anspruch 1, **dadurch gekennzeichnet, dass** das Spannelement (1) von zwei Schenkeln (12, 13) gebildet ist, wobei der eine Schenkel den Rasthaken (4) sowie eine Schräge (9) aufweist.

3. Photovoltaik-Paneldose nach Anspruch 2, **dadurch gekennzeichnet, dass** der Rasthaken (4) des einen Schenkels (12) seitlich an den Kontakten (7, 8) vorbeiführbar ist.

4. Photovoltaik-Paneldose nach einem der vorhergehenden Ansprüche, **dadurch gekennzeichnet, dass** ein Teil des Spannelementes (1) zumindest einen Schlitz (14) aufweist.

5. Photovoltaik-Paneldose nach einem der vorhergehenden Ansprüche, **dadurch gekennzeichnet, dass** das Spannelement (1) in seinem oberen Endbereich eine Öffnung (10) aufweist.

6. Photovoltaik-Paneldose nach einem der vorhergehenden Ansprüche, **dadurch gekennzeichnet, dass** das Spannelement (1) an zumindest seinem einen seitlichen Endbereich eine Montageöffnung (11) aufweist.

## Claims

1. Photovoltaic junction box, having a housing lower part and a housing upper part which interacts with the said housing lower part, wherein a seal is provided between the housing lower part and the housing upper part, and there is at least one connection plug for a connection line and, in the interior of the photovoltaic junction box, a contact carrier (2) with at least one contact (8), **characterized in that** a clamping element (1) can be attached to the contact carrier (2) with the at least one contact (8), wherein the clamping element (1) can be moved from a preliminary position to a latching position, and the clamping element (1) has at least one latching hook (4), and the contact carrier (2) has at least two openings (5, 6) in the interior of the photovoltaic junction box, wherein one opening (5) interacts with the latching hook (4) in the preliminary position, and the latching hook (4) interacts with the at least one further opening (6) in the latching position.

2. Photovoltaic junction box according to Claim 1, **characterized in that** the clamping element (1) is formed by two limbs (12, 13), wherein one limb has the latching hook (4) and a bevel (9).

3. Photovoltaic junction box according to Claim 2, **characterized in that** the latching hook (4) of one limb (12) can be guided laterally past the contacts (7, 8).

4. Photovoltaic junction box according to one of the preceding claims, **characterized in that** a portion of the clamping element (1) has at least one slot (14).

5. Photovoltaic junction box according to one of the preceding claims, **characterized in that** the clamping element (1) has an opening (10) in its upper end region.

6. Photovoltaic junction box according to one of the preceding claims, **characterized in that** the clamping element (1) has a mounting opening (11) on at least its one lateral end region.

## Revendications

1. Prise de panneau photovoltaïque, présentant une partie inférieure de boîtier ainsi qu'une partie supérieure de boîtier coopérant avec celle-ci, un joint étant prévu entre la partie inférieure de boîtier et la partie supérieure de boîtier, et il existe au moins une fiche de raccordement pour une ligne de raccordement et à l'intérieur de la prise de panneau photovoltaïque un support de contact (2) pourvu d'au moins un contact (8), **caractérisée en ce qu'**un élément de serrage (1) peut être fixé sur le support de contact (2) pourvu dudit au moins un contact (8), l'élément de serrage (1) pouvant être amené d'une position préliminaire à une position de verrouillage et l'élément de serrage (1) présentant au moins un crochet d'arrêt (4), et le support de contact (2) présentant à l'intérieur de la prise de panneau photovoltaïque au moins deux orifices (5, 6), ledit un orifice (5) coopérant avec le crochet d'arrêt (4) dans la position préliminaire et le crochet d'arrêt (4) coopérant avec ledit au moins un autre orifice (6) dans la position de verrouillage.

2. Prise de panneau photovoltaïque selon la revendication 1, **caractérisée en ce que** l'élément de serrage (1) est formé par deux branches (12, 13), ladite une branche présentant le crochet d'arrêt (4) ainsi qu'un biseau (9).

3. Prise de panneau photovoltaïque selon la revendication 2, **caractérisée en ce que** le crochet d'arrêt (4) de ladite une branche (12) peut passer latéralement devant les contacts (7, 8).

4. Prise de panneau photovoltaïque selon l'une quelconque des revendications précédentes, **caractérisée en ce qu'**une partie de l'élément de serrage (1) présente au moins une fente (14).

5. Prise de panneau photovoltaïque selon l'une quelconque des revendications précédentes, **caractérisée en ce que** l'élément de serrage (1) présente un orifice (10) dans sa partie d'extrémité supérieure.

6. Prise de panneau photovoltaïque selon l'une quelconque des revendications précédentes, **caractérisée en ce que** l'élément de serrage (1) présente un orifice de montage (11) au moins au niveau de sa zone d'extrémité latérale.
